# EUROPÄISCHE PATENTANMELDUNG

(11) **EP 1 067 368 A1**
(43) Veröffentlichungstag der Anmeldung: **10.01.2001**
(21) Anmeldenummer: 99810606.6
(22) Anmeldetag: 08.07.1999
(51) Int. Cl.: G01F 23/24, G01F 23/26

(54) **Pegelstandsmessvorrichtung**

(71) Anmelder: HELIOS AG Niveaumessung und Wägetechnik, CH-4106 Therwil (CH)
(72) Erfinder: Fatzer, Adrian, 4102 Binningen (CH); Gempp, Peter, 4153 Reinach (CH); Schuler, Alfred, 4105 Biel-Benken (CH)

(57) **Zusammenfassung**

Die Vorrichtung zur Messung der Standhöhe eines in einem Behälter befindlichen flüssigen Mediums umfasst eine im wesentlichen stabförmige elektrische Sonde (S), die im Betrieb je nach Standhöhe mehr oder weniger tief in das zu messende Medium eintaucht, und eine mit der Sonde zusammenwirkende Messelektronik (E), welche eine Speiseeinrichtung (10,60) zur Beaufschlagung der Sonde mit elektrischer Wechselstrom-Energie und eine Wandlereinrichtung (20;70) umfasst, welche eine pegelstandsabhängige elektrische Messgrösse zwischen der Sonde (S) und dem das Medium enthaltenden Behälter (B) erfasst und ein die elektrische Messgrösse und damit die Standhöhe repräsentierendes elektrisches Ausgangssignal erzeugt. Die Sonde (S) weist zusätzlich einen Leitfähigkeitsfühler (L) zur Erfassung der elektrischen Leitfähigkeit des die Sonde umgebenden Mediums auf, und die Messelektronik (E) enthält eine mit dem Leitfähigkeitsfühler zusammenwirkende Leitfähigkeitsmesseinrichtung (40), welche aus der vom Leitfähigkeitsfühler (F) erfassten Leitfähigkeit eine elektrische Steuergrösse ableitet. Die Messelektronik (E) ist dazu ausgebildet, diese Steuergrösse in die Erfassung der pegelstandsabhängigen elektrischen Messgrösse bzw. in die Erzeugung des die letztere repräsentierenden elektrischen Ausgangssignals mit einzubeziehen.

Durch die integrierte Leitfähigkeitsmessung ist die Messvorrichtung schaumunempfindlich und kann sich bezüglich Leitfähigkeit des Mediums selbsttätig kalibrieren.

## Beschreibung

Die Erfindung betrifft eine Vorrichtung zur Messung der Standhöhe eines insbesondere in einem Behälter befindlichen Mediums, insbesondere einer Flüssigkeit gemäss dem Oberbegriff des unabhängigen Anspruchs.

Zahlreiche Füllstandsmessungen werden mit Hilfe sogenannter Stabsonden durchgeführt. Hierbei wird ein meist glatter Sondenstab in den Behälter getaucht, die Sonde mit elektrischer Energie beaufschlagt und eine elektrische Messgrösse zwischen Sonde und Behälter oder einer Referenz-Elektrode abgenommen. Häufig verwendete Messgrössen sind Kapazität und Leitwert.

Eine typische nach dem kapazitiven Prinzip arbeitende Pegelstandsmessvorrichtung ist z.B. in der DE-A-28 09 340 beschrieben. Hierbei wird eine in der Regel stabförmige Messonde von oben so in das Behältnis, in dem die Standhöhe eines Mediums zu überwachen ist, elektrisch isoliert eingebaut, dass die Sonde in das Medium hineinragt. Alternativ kann sich die Sonde auch vom Boden des Behältnisses nach oben erstrecken. Die zwischen der Sonde und der Behältniswand oder einer Referenz-Elektrode herrschende Kapazität oder bei Spezialsonden die Kapazität der Sonde selbst ist dann ein Mass für den Pegelstand des Mediums im Behältnis. Die Messung der Kapazität erfolgt typischerweise so, dass die Sonde mit Wechselspannung einer vorgegebenen Frequenz von z.B. 5 kHz beaufschlagt wird und die Kapazität als zeitbestimmendes Element in einer Zeitschaltstufe verwendet wird, welche ein Ausgangssignal von der Kapazität der Sonde entsprechender Dauer erzeugt, das dann in ein in der Industrie übliches Norm-Signal (z.B. Strom 4-20 mA oder Spannung 0-10 V entsprechend den Pegelstandsgrenzwerten "leer" bzw. "voll") aufbereitet wird. Schaltungstechniken zur Realisierung von Kapazitätsmessungen und zur Weiterverarbeitung in Normsignale sind dem Fachmann geläufig und z.B. ebenfalls im genannten Dokument im Detail beschrieben.

Eine typische nach dem Leitfähigkeitsprinzip bzw. speziell nach dem sogenannten potentiometrischen Prinzip arbeitende Pegelstandsmessvorrichtung ist Gegenstand z.B. der US-A-4 188 826. Hierbei taucht eine leitfähige, einen endlichen elektrischen Widerstand aufweisende stabförmige Sonde von oben in das zu messende, leitfähige Medium ein bzw. ragt vom Boden des Behältnisses nach oben, wobei die Sonde elektrisch vom Behälter isoliert ist. Die stabförmige Sonde wird über an ihren beiden Enden befindliche Anschlüsse und vom Medium isolierte Leitungen mit einem elektrischen Wechselstrom von typischerweise mehreren Ampere und einer Frequenz von z.B. 5 kHz beaufschlagt. Zwischen der stromdurchflossenen Stabsonde und der Behälterwand bzw. einer Referenz-Elektrode stellt sich eine Potentialverteilung ein, welche im wesentlichen linear von der Höhe des Pegelstands abhängt. Diese Potentialverteilung bzw. einfach die elektrische Spannung zwischen z.B. dem eingetauchten Ende der Sonde und einem Punkt der Behälterwand oder der Referenz-Elektrode, wird mittels einer Wechselspannungsmessvorrichtung gemessen und in ein elektrisches Normsignal umgewandelt. Details sind im genannten Dokument ausführlich beschrieben.

Bei diesen bekannten Messvorrichtungen bzw. Messprinzipien hängt der gemessene Wert (Kapazität, Potential-Differenz) von den betreffenden elektrischen Eigenschaften des zu messenden Mediums ab. Dadurch sind Messungen mit solchen Vorrichtungen zumindest stoffabhängig sowie auch, insbesondere bei kapazitiven Sonden, mehr oder weniger einbauabhängig. Derartige Messvorrichtungen müssen also für den jeweiligen Einsatzfall und speziell das zu messende Medium kalibriert werden.

Ein besonders kritischer Fall von Stoffabhängigkeit ist das gleichzeitige Vorhandensein von Schaum über dem zu messenden Flüssigkeitsstand. Vor allem kapazitive Sonden täuschen dann den Schaumpegel als vollen Füllstand vor, wobei die daraus resultierenden Folgen in geregelten Prozessen oft schwerwiegend sind. Beispielsweise können Pumpen durch Trockenlaufen beschädigt werden.

Nach dem potentiometrischen Prinzip arbeitende Messvorrichtungen, beispielsweise etwa der in der genannten US-A-4 188 826 im Detail beschriebene Potentiometrische Füllstandsmesser PMS 92 der Anmelderin, ist in gewissen Grenzen weniger Einbau- und Messstoff-empfindlich. Auch die Schaumempfindlichkeit besteht nicht mehr in praxisrelevantem Ausmass, solange die Sondenspitze noch ausreichend mit Messmedium (Messflüssigkeit) bedeckt ist.

In vielen Fällen realer Prozesse ist diese Voraussetzung jedoch nicht gegeben. So tritt beispielsweise bei Abscheidebehältern in der Milchverarbeitung der typische Fall ein, dass der Behälter mit weit mehr als der Hälfte seiner Füllkapazität mit Schaum gefüllt ist, ohne dass sich noch Messflüssigkeit im Behälter befindet. In solchen Fällen versagt auch der genannte Potentiometrische Füllstandsmesser PMS 92. Hinzu kommt noch erschwerend, dass die Sonde in derartigen Behältern stehend im Boden und nicht wie sonst meist üblich hängend im Deckel eingebaut werden soll.

Auch kann die verbliebene Abhängigkeit von der Leitfähigkeit des Messstoffs im Falle sehr grosser Unterschiede, z.B. zwischen Milch und Schwefelsäure, wie es beim Reinigen von Tanks in der Lebensmittelindustrie vorkommt, Schwierigkeiten bereiten.

In anderen Prozessen treten wechselseitig leitfähige und nichtleitende Messstoffe (z.B. Öl) auf. Die bekannten Füllstandsmessverfahren sind für diese Fälle nur sehr bedingt tauglich. Insbesondere versagt der potentiometrische Füllstandsmesser PMS 92 bei nichtleitenden Stoffen trotz seiner sonst sehr vorteilhaften Eigenschaften vollständig.

Es stellt sich also die Aufgabe, eine Vorrichtung zur Messung des Füllstands von insbesondere flüssigen Medien so zu verbessern, dass sie nicht nur - in Grenzen - messmedium- und einbauunempfindlich ist, sondern auch noch in der Lage ist, beim Auftreten von übermässigem Schaum eine Fehlmessung zu vermeiden. Ausserdem soll diese Vorrichtung auch für wechselnde Medien mit sehr grossen Leitfähigkeitsunterschieden geeignet sein. Schliesslich soll die Vorrichtung gleichermassen für leitende und nichtleitende Messmedien geeignet sein.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: ein Prinzipschema eines ersten, nach dem kapazitiven Prinzip arbeitenden Ausführungsbeispiels der erfindungsgemässen Messvorrichtung,
- Fig. 2: ein Prinzipschema eines zweiten, nach dem potentiometrischen Prinzip arbeitenden Ausführungsbeispiels der erfindungsgemässen Messvorrichtung,
- Fig. 3: ein Prinzipschema eines dritten, sowohl nach dem kapazitiven als auch nach dem potentiometrischen Prinzip arbeitenden Ausführungsbeispiels der erfindungsgemässen Messvorrichtung,
- Fig. 4: eine schematische Skizze einer ersten konkreten Realisierungsform des Leitfähigkeitsfühlers der Messvorrichtung und
- Fig. 5: eine schematische Skizze einer zweiten Realisierungsform des Leitfähigkeitsfühlers der erfindungsgemässen Messvorrichtung.

Die in der Zeichnung dargestellte Messvorrichtung umfasst im wesentlichen eine Sonde S und eine mit dieser zusammenwirkende Messelektronik E. Die Sonde S ist in Form eines schlanken, metallisch leitenden Stabs oder Rohrs ausgebildet und taucht im Betrieb abhängig vom zu erfassenden Pegelstand mehr oder weniger tief in das zu messende Medium ein. Das Medium M befindet sich typischerweise, aber nicht notwendig, in einem Behältnis B. Die Sonde S ist an ihrem einen Ende mechanisch positioniert; dieses Ende wird als Sondenkopf Sₖ bezeichnet. Das andere Ende ist die Sondenspitze Sₛ. Typischerweise ist die Sonde hängend im Deckel des Behältnisses befestigt, so dass die Sondenspitze unten liegt. Es ist jedoch auch eine stehende Befestigung am Boden des Behältnisses möglich, wobei dann die Sondenspitze oben liegt. Im folgenden wird die Erfindung am Beispiel einer hängend angeordneten Sonde beschrieben, bei stehender Sondenanordnung gelten die Ausführungen sinngemäss.

Die Messelektronik E ist je nach dem zur Anwendung gelangenden Messprinzip ausgebildet und ermittelt eine zwischen der Sonde S und einem Bezugspunkt anliegende, pegelstandsabhängige elektrische Messgrösse und erzeugt aus dieser Messgrösse ein entsprechendes pegelstandsabhängiges Norm-Ausgangssignal, welches an einem Ausgang A der Messelektronik E zur Verfügung gestellt wird und dort zur Anzeige oder weiteren Verarbeitung abgegriffen werden kann. Als Bezugspunkt wird typischerweise das Behältnis B bzw. ein Punkt desselben verwendet; in gewissen Anwendungsfällen kann aber auch eine in das Medium eintauchende Referenz-Elektrode eingesetzt werden. Bei den im folgenden beschriebenen Ausführungsbeispielen der Erfindung ist der Bezugspunkt stets das Behältnis und durch das Erdungszeichen ┴ symbolisiert. Als pegelstandsabhängige elektrische Messgrösse wird typischerweise die Kapazität der Sonde S oder die Potentialdifferenz der Sonde S bezüglich des Bezugspunkts bestimmt. Die Arbeitsweisen der Messvorrichtung werden entsprechend als kapazitives bzw. potentiometrisches Messprinzip bezeichnet.

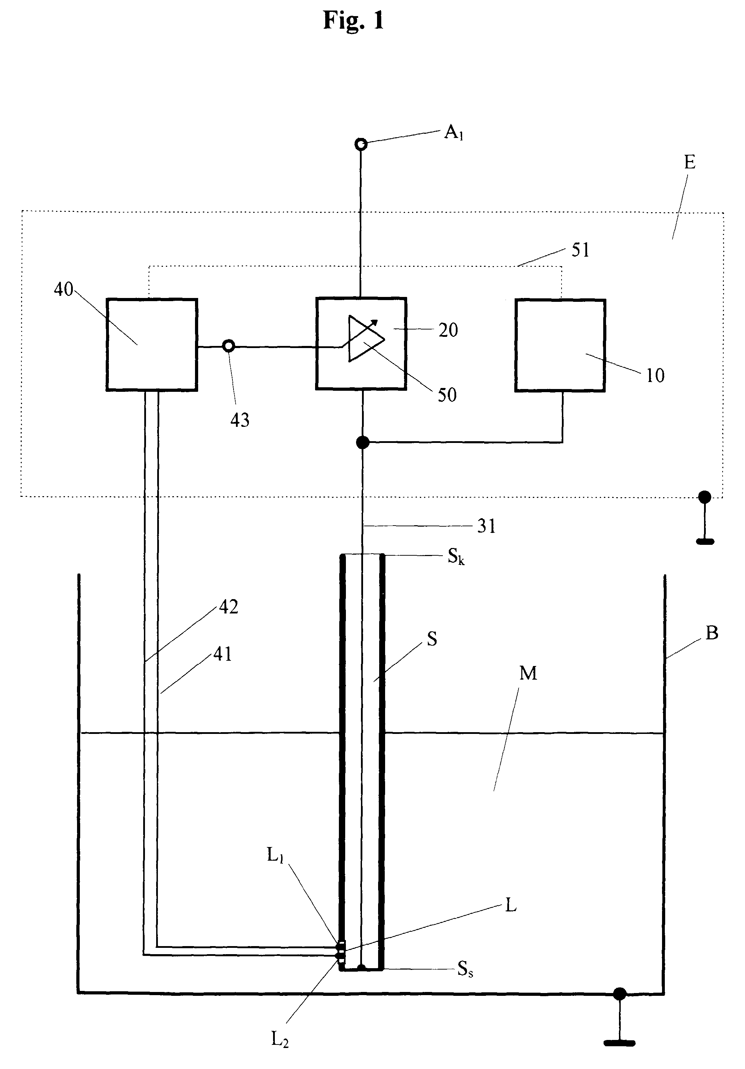

In dieser Allgemeinheit stimmen die in den Figuren 1-3 gezeigten Ausführungsbeispiele der erfindungsgemässen Messvorrichtung mit dem z.B. durch die einleitend angeführten Druckschriften dokumentierten Stand der Technik überein, so dass sich diesbezüglich eine nähere Erläuterung erübrigt.

Die Fig. 1 zeigt ein nach dem kapazitiven Prinzip arbeitendes Ausführungsbeispiel der erfindungsgemässen Messvorrichtung. Hier umfasst die Messelektronik E eine elektrische Speiseeinrichtung in Form einer Wechselspannungsquelle 10 und eine Wandlereinrichtung 20. Die Wechselspannungsquelle 10 und die Wandlereinrichtung 20 sind einerseits mit dem Behältnis B (Bezugspunkt ┴) und anderseits über eine isolierte, vorzugsweise durch das Innere der Sonde geführte Leitung 31 mit der Sondenspitze Sₛ verbunden. Die Wechselspannungsquelle 10 beaufschlagt die Sonde S mit einer Wechselspannung von ca. 5 kHz. Die Wandlereinrichtung 20 misst die zwischen der Sonde S und dem Behältnis B (dem Bezugspunkt 1) herrschende pegelstandsabhängige Kapazität und setzt diese in ein entsprechendes, die Standhöhe des zu messenden Mediums repräsentierendes Ausgangssignal um, das an einem Ausgang A₁ zur Verfügung steht. Details der Wechselspannungsquelle 10 und der Wandlereinrichtung 20 sind z.B. in der eingangs genannten DE-A-28 09 340 beschrieben und bedürfen daher keiner näheren Erläuterung.

Gemäss einem ersten wesentlichen Aspekt der Erfindung ist die stabförmige Sonde S zusätzlich mit einem Leitfähigkeitsfühler L zur Erfassung des die Sonde umgebenden Mediums ausgestattet. Dieser Leitfähigkeitsfühler L ist (elektrisch isoliert) am (im Einsatz) unteren Ende (hier also an der Sondenspitze Sₛ) der Sonde S angebracht und besteht in an sich bekannter Weise im wesentlichen aus zwei im relativ geringen gegenseitigen Abstand angeordneten Elektroden L₁ und L₂, die mit dem die Sonde umgebenden Medium (sofern vorhanden) in Kontakt stehen. Die Messelektronik E ist mit einer Leitfähigkeitsmesseinrichtung 40 ausgestattet, welche mit den beiden Elektroden L₁ und L₂ des Leitfähigkeitsfühlers L über zwei isolierte Leitungen 41 und 42 verbunden ist. Die beiden Leitungen 41 und 42 sind in der Praxis wie die Leitung 31 durch das Innere der Sonde S geführt. Die Leitfähigkeitsmesseinrichtung 40 besteht in an sich bekannter Weise im wesentlichen aus einer wechselstromgespeisten Widerstandsmessbrücke mit zugeordnetem Messverstärker und erzeugt an ihrem Ausgang 43 ein elektrisches Signal, welches die elektrische Leitfähigkeit des die Sonde S umgebenden Mediums repräsentiert. Dieses die Leitfähigkeit des Mediums repräsentierende Signal wird gemäss einem weiteren wesentlichen Aspekt der Erfindung als Steuergrösse in die Ermittlung der Sondenkapazität und damit der Standhöhe des Mediums mit einbezogen.

Damit sich die Leitfähigkeitsmessung und die Kapazitätsmessung nicht gegenseitig störend beeinflussen, sind die die Sonde S beaufschlagende elektrische Wechselspannung und die die Elektroden L₁ und L₂ des Leitfähigkeitsfühlers L beaufschlagende Wechselspannung synchronisiert. Das heisst, der Leitfähigkeitsfühler L wird ebenfalls mit einer Wechselspannung von 5 kHz betrieben, und diese Wechselspannung ist phasenstarr an die Wechselspannungsquelle 10 gekoppelt. In der Figur 1 ist diese phasenstarre Kopplung durch die strichpunktierte Linie 51 angedeutet.

Das von der Messelektronik E erzeugte pegelstandsabhängige Ausgangssignal ist, wie schon eingangs erwähnt, noch von verschiedenen anderen Faktoren, insbesondere auch der Leitfähigkeit des Messmediums abhängig. Aus diesem Grund muss die Messelektronik u.a.a. bezüglich der Leitfähigkeit des Mediums kalibriert werden (z.B. Verstärkung, Nullpunkt, Linearität). Dazu ist die Wandlereinrichtung 20 bei herkömmlichen Pegelstandsmessvorrichtungen üblicherweise mit einem oder mehreren manuellen Kalibrierorganen (z.B. einstellbare Widerstände, einstellbare Kapazitäten) versehen. Gemäss einem weiteren wichtigen Aspekt der Erfindung sind nun diese Kalibierorgane in an sich bekannter Weise elektrisch steuerbar ausgebildet, z.B. als spannungsgesteuerte Widerstände, spannungsgesteuerte Kapazitäten oder spannungsgesteuerte Verstärker, wobei alle diese elektrisch steuerbaren Kalibrierorgane in der Zeichnung durch einen spannungsgesteuerten Verstärker 50 innerhalb der Wandlereinrichtung 20 symbolisiert sind. Diese elektrisch gesteuerten Kalibrierorgane sind mit dem Ausgang 43 der Leitfähigkeitsmesseinrichtung 40 verbunden und werden dadurch mit dem von dieser erzeugten, leitfähigkeitsabhängigen elektrischen Ausgangssignal als Steuergrösse beaufschlagt. Auf diese Weise kann sich die Messelektronik E bezüglich der Leitfähigkeit des Messmediums selbst kalibrieren.

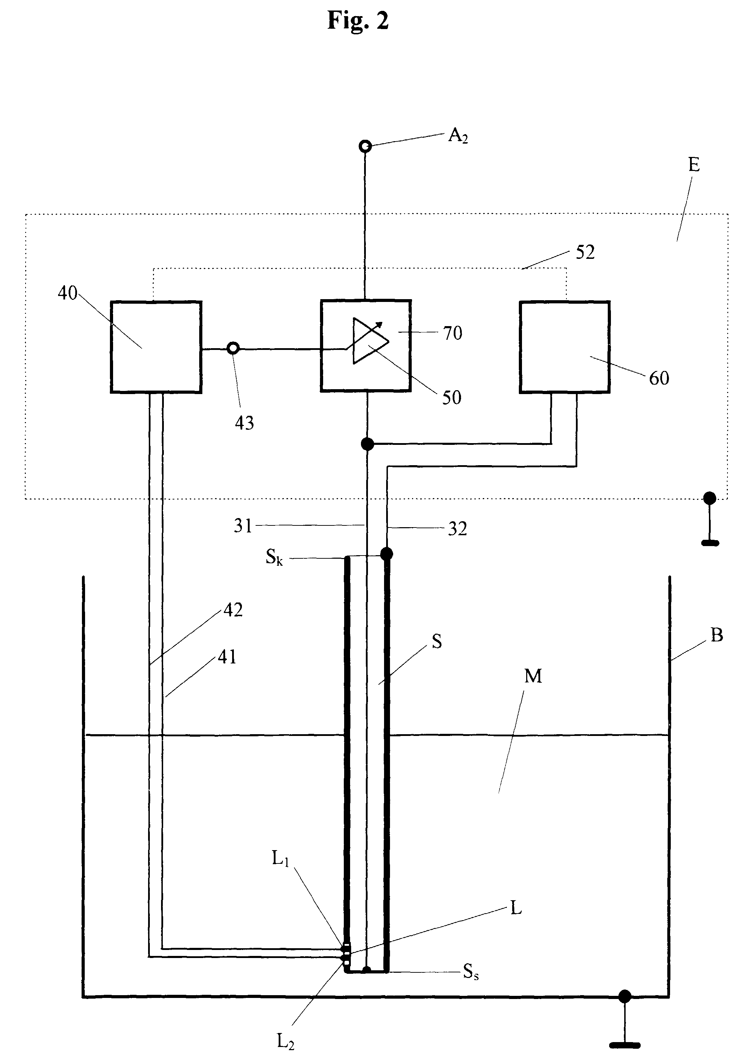

Die Fig. 2 zeigt ein nach dem potentiometrischen Prinzip arbeitendes Ausführungsbeispiel der erfindungsgemässen Messvorrichtung. Hier umfasst die Messelektronik E eine elektrische Speiseeinrichtung in Form einer sehr niederohmigen Wechselstromquelle 60 und eine dem potentiometrischen Messprinzip angepasste Wandlereinrichtung 70. Die Wechselstromquelle 60 und die Wandlereinrichtung 70 sind einerseits mit dem Behältnis B (Bezugspunkt ┴) und anderseits über zwei isolierte Leitungen 31 und 32 mit der Sondenspitze Sₛ bzw. mit dem Sondenkopf Sₖ verbunden. Die Wechselstromquelle 60 prägt der Sonde S einen elektrischen Wechselstrom mit einer Frequenz von ca. 5 kHz ein. Die Wandlereinrichtung 70 misst die zwischen der Sonde S und dem Behältnis B (dem Bezugspunkt ┴) herrschende pegelstandsabhängige Potentialdifferenz (Spannung) und setzt diese in ein entsprechendes, die Standhöhe des zu messenden Mediums repräsentierendes Ausgangssignal um. Dieses steht an einem Ausgang A₂ zur Verfügung. Details der Wechselstromquelle 60 und der Wandlereinrichtung 70 sind z.B. in der eingangs genannten US-A-4 188 826 beschrieben und bedürfen daher keiner näheren Erläuterung.

In gleicher Weise wie beim Ausführungsbeispiel der Fig. 1 sind ferner in der Nähe der Sondenspitze ein Leitfähigkeitsfühler L und in der Messelektronik E eine Leitfähigkeitsmesseinrichtung 40 vorgesehen. Die Speisung des Leitfähigkeitsfühlers L ist mit der Wechselstromquelle 60 phasenstarr gekoppelt, wobei diese Kopplung durch die strichpunktierte Linie 52 symbolisiert ist. Die Wandlereinrichtung 70 ist ferner mit durch einen spannungsgesteuerten Verstärker 50 symbolisierten elektrisch steuerbaren Kalibrierorganen versehen, die mit dem Ausgang 43 der Leitfähigkeitsmesseinrichtung 40 verbunden sind. Somit kann die Messelektronik E die von der Leitfähigkeitsmesseinrichtung erzeugte leitfähigkeitsabhängige Steuergrösse in die Bildung des pegelstandsabhängigen Ausgangssignals mit einbeziehen bzw. sich selbst bezüglich der Leitfähigkeit des Messmediums kalibrieren.

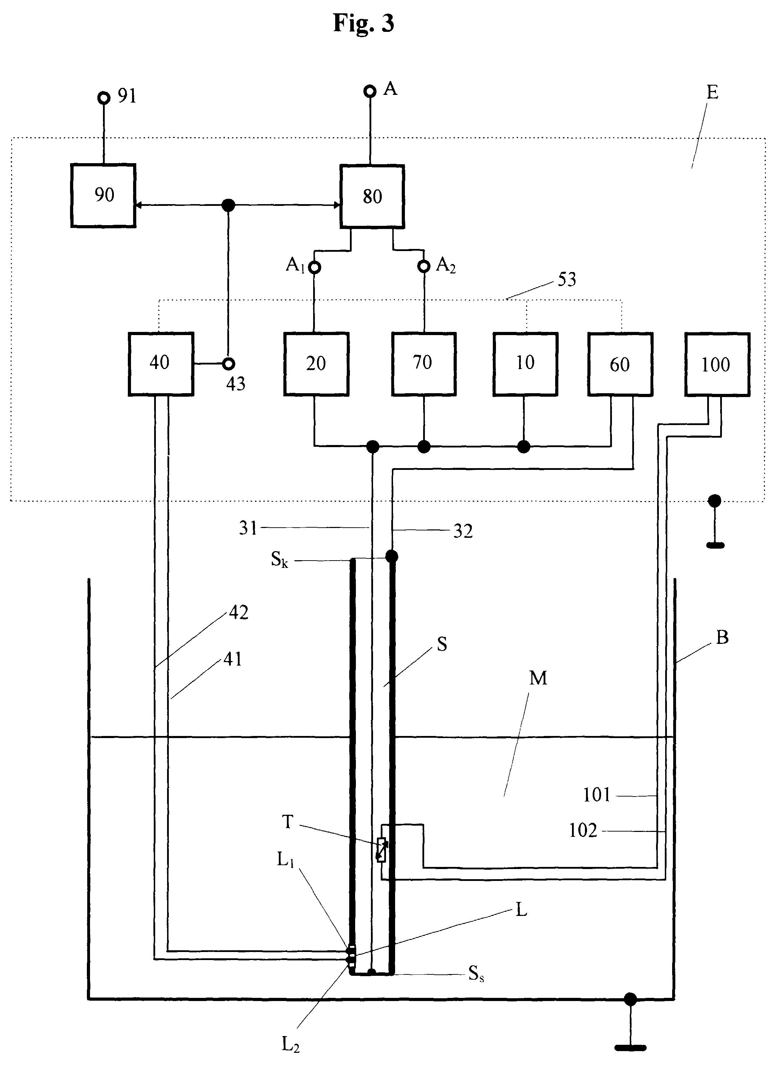

Die Fig. 3 zeigt ein bevorzugtes Ausführungsbeispiel der erfindungsgemässen Messvorrichtung, bei dem das kapazitive und das potentiometrische Messprinzip in einer einzigen Vorrichtung kombiniert sind.

Die Sonde S ist gleich ausgebildet wie bei den beiden anderen Ausführungsbeispielen und enthält ebenfalls wieder einen Leitfähigkeitsfühler L.

Die Messelektronik E enthält die mit dem Leitfähigkeitsfühler L über die beiden Leitungen 41 und 42 verbundene Leitfähigkeitsmesseinrichtung 40, welche an ihrem Ausgang 43 ein der Leitfähigkeit des die Sonde umgebenden Mediums entsprechendes elektrisches Signal bereitstellt.

Die Messelektronik E enthält ferner eine elektrische Speiseeinrichtung, die eine Wechselspannungsquelle 10 und eine Wechselstromquelle 60 umfasst. Die Wechselspannungsquelle und die Wechselstromquelle sind gleich ausgebildet wie die entsprechenden Komponenten der Ausführungsbeispiele der Figuren 1 bzw. 2. Ferner enthält die Messelektronik E eine kapazitive Wandlereinrichtung 20 und eine potentiometrische Wandlereinrichtung 70, welche beiden Wandlereinrichtungen gleich ausgebildet sind wie die entsprechenden Komponenten der Ausführungsbeispiele der Figuren 1 bzw. 2. Die Wechselspannungsquelle 10, die Wechselstromquelle 60 und die beiden Wandlereinrichtungen 20 und 70 sind in analoger Weise wie bei den Ausführungsbeispielen der Figuren 1 und 2 einerseits mit dem Behältnis B (Bezugspunkt ┴) und anderseits über die zwei isolierten Leitungen 31 und 32 mit der Sondenspitze Sₛ bzw. mit dem Sondenkopf Sₖ verbunden. Die Wechselspannungsquelle 10 und die Wechselstromquelle 60 beaufschlagen die Sonde S gleichzeitig. Sie sind zur Vermeidung der gegenseitigen störenden Beeinflussung untereinander und mit der Speisung des Leitfähigkeitsfühlers L phasenstarr synchronisiert. Die Synchronisierung ist durch eine strichpunktierte Linie 53 sybolisiert. Die Funktionen der Wandlereinrichtungen 20 und 70 sind gleich wie bei den Ausführungsbeispielen der Figuren 1 bzw. 2; ihre pegelstandsabhängigen Ausgangssignale stehen an den beiden Ausgängen A₁ bzw. A₂ zur Verfügung.

Die Messelektronik E ist ferner mit einer Umschalteinrichtung 80 versehen, welche vom Ausgangssignal der Leitfähigkeitsmesseinrichtung 40 als Steuergrösse angesteuert wird und in Abhängigkeit von dieser entweder den Ausgang A1 der kapazitiven Wandlereinrichtung 20 oder den Ausgang A2 der potentiometrischen Wandlereinrichtung 70 mit dem Vorrichtungsausgang A verbindet. Der Umschaltpunkt der Umscalteinrichtung 80 ist dabei vorzugsweise so eingestellt, dass bei einer gemessenen Leitfähigkeit des Mediums über einem vorzugsweise einstellbaren Schwellenwert von ca. 1-2 µS (Mikro Siemens) das Ausgangssignal der potentiometrischen Wandlereinrichtung 70 und bei Unterschreitung dieses Schwellenwerts das Ausgangssignal der kapazitiven Wandlereinrichtung 20 an den Vorrichtungsausgang A geschaltet wird. Auf diese Weise wird die Vorrichtung je nach elektrischer Leitfähigkeit des zu messenden Mediums selbsttätig vom potentiometrischen in den kapazitiven Betriebsmodus geschaltet bzw. umgeschaltet und somit automatisch optimal an das Messmedium angepasst.

Im Ausführungsbeispiel der Figur 3 ist die Umschalteinrichtung 80 zur einfacheren Verdeutlichung des Prinzips den beiden Wandlereinrichtungen 20 und 70 nachgeschaltet. Es versteht sich, dass eine entsprechende Umschaltung auch innerhalb der beiden Wandlereinrichtungen oder an deren Eingängen erfolgen könnte.

Gemäss einem weiteren Aspekt der Erfindung kann das von der Leitfähigkeitsmesseinrichtung erzeugte Ausgangssignal auch zur Erkennung von Schaum ausgewertet werden. Das Ausgangssignal wird dazu einem in der Messelektronik E vorgesehenen Diskriminator 90 zugeführt, welcher es mit einem vorzugsweise einstellbaren Schaum-Schwellenwert (sehr niedriger Leitwert) vergleicht und an einem Ausgang 91 ein elektrisches, das Vorliegen von Schaum anzeigendes Signal erzeugt, wenn der gemessene Leitfähigkeitswert des Mediums unter dem Schaum-Schwellenwert liegt oder unter diesen fällt.

Ferner kann die Sonde S noch mit einem an sich bekannten Fühler T zur Erfassung der Temperatur des die Sonde umgebenden Mediums versehen sein, welcher mit einer in der Messelektronik E vorgesehenen Temperaturmesseinrichtung 100 mittels vorzugsweise durch das Innere der Sonde geführte Leitungen 101 und 102 verbunden ist und zusammenarbeitet. Die erfasste Temperatur des Mediums kann in verschiedener Form ausgegeben und ausgewertet werden.

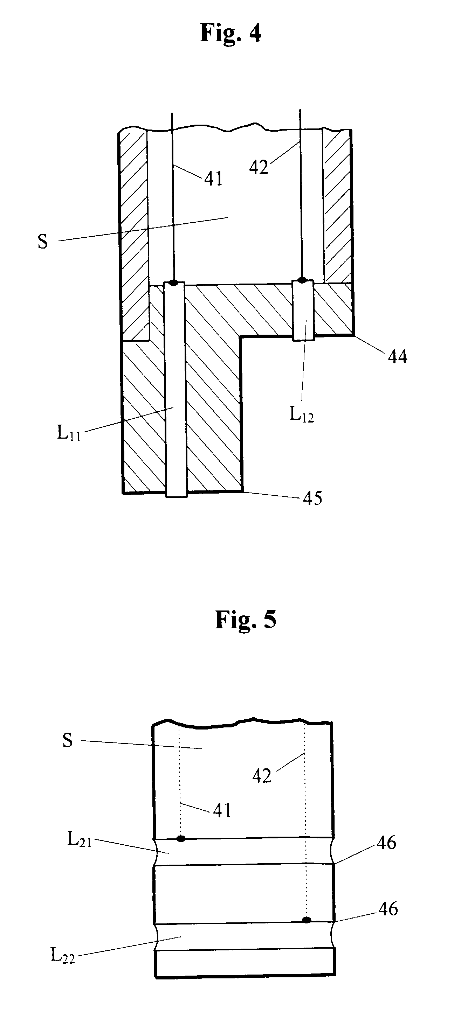

Für viele praktische Anwendungsfälle muss die Sonde relativ schlank (z.B. 6mm Aussendurchmesser) ausgebildet sein. Dies führt dazu, dass die beiden Elektroden des Leitfähigkeitsfühlers L relativ eng bei einander angeordnet sein müssen. Dabei ergibt sich wiederum das je nach Medium mehr oder weniger stark ausgeprägte Problem, dass beim Absinken des Mediums unter das Niveau des Leitfähigkeitsfühlers L Flüssigkeitstropfen zwischen den Elektroden hängen bleiben können und diese so überbrücken. Dadurch wird eine Fehlmessung verursacht. Gemäss einem weiteren wichtigen Aspekt der Erfindung sind daher der Leitfähigkeitsfühler L und die Sonde S im Bereich des Leitfähigkeitsfühlers F so ausgebildet, dass keine Flüssigkeitstropfen hängen bleiben und dadurch Fehlmessungen verursachen können. Zwei diesen Anforderungen genügende beispielsweise Realisierungsformen für die Sonde S sind in den Figuren 4 und 5 schematisch dargestellt.

Gemäss Fig. 4 ist der unterste Teil der Sonde S - hier die Sondenspitze Sₛ - aus einem isolierenden Material gebildet und abgestuft geformt. Die beiden Elektroden L₁₁ und L₁₂ sind stiftförmig ausgebildet und achsparallel angeordnet. Die Abstufung und das unterste Ende der Sonde S sind relativ scharfkantig ausgebildet. Durch diese abgestufte Ausbildung der Sonde mit scharfen Abrisskanten 44 und 45 und durch die achsial versetzte Anordnung der beiden Elektroden wird eine Brückenbildung zwischen den Elektroden zuverlässig vermieden.

Gemäss Fig. 5 besteht der unterste Teil der Sonde S ebenfalls aus einem isolierenden Material. Die beiden Elektroden L₂₁ und L₂₂ sind hier jedoch als parallele konkave Ringe ausgebildet, wobei die Übergänge zwischen den beiden Elektroden-Ringen und den benachbarten zylindrischen Abschnitten der Sonde S relativ scharfe Abrisskanten 46 bilden, die die Überbrückung der beiden Elektroden durch Flüssigkeitstropfen verhindern.

Selbstverständlich kann die Brückenbildung und damit eine Fehlmessung auch noch durch andere Ausgestaltungen und Anordnungen der Elektroden des Leitfähigkeitsfühlers L vermieden werden. Zu berücksichtigen sind dabei vor allem die Benetzungsfähigkeit und die Haftfähigkeit bzw. Klebrigkeit des Mediums.

Gemäss einer weiteren Ausgestaltung der Erfindung ist es auch möglich, längs der Sonde S verteilt zwei oder mehrere Leitfähigkeitsfühler anzuordnen. Damit kann dann z.B. die Lage der Grenzschicht von zwei unterschiedlichen, sich durch die Leitfähigkeit hinreichend unterscheidenden Medien erfasst werden. Ferner ist es auch möglich, die gemessene Leitfähigkeit des Mediums als solche anzuzeigen bzw. z.B. in Form eines Normsignals zur weiteren Verarbeitung zur Verfügung zu stellen.

## Patentansprüche

1. Vorrichtung zur Messung der Standhöhe eines insbesondere in einem Behälter befindlichen Mediums, insbesondere einer Flüssigkeit, mit einer im wesentlichen stabförmigen elektrischen Sonde (S), die im Betrieb je nach Standhöhe mehr oder weniger tief in das zu messende Medium eintaucht, und mit einer mit der Sonde zusammenwirkenden Messelektronik (E), welche eine Speiseeinrichtung (10;60) zur Beaufschlagung der Sonde mit elektrischer Wechselstrom-Energie und eine Wandlereinrichtung (20;70) umfasst, welche eine pegelstandsabhängige elektrische Messgrösse zwischen der Sonde (S) und einem Bezugspunkt (┴), insbesondere dem das Medium enthaltenden Behälter (B) erfasst und ein die elektrische Messgrösse und damit die Standhöhe repräsentierendes elektrisches Ausgangssignal erzeugt, dadurch gekennzeichnet, dass die Sonde (S) einen Leitfähigkeitsfühler (L) zur Erfassung der elektrischen Leitfähigkeit des die Sonde umgebenden Mediums aufweist, dass die Messelektronik (E) eine mit dem Leitfähigkeitsfühler zusammenwirkende Leitfähigkeitsmesseinrichtung (40) enthält, welche aus der vom Leitfähigkeitsfühler (F) erfassten Leitfähigkeit eine elektrische Steuergrösse ableitet, und dass die Messelektronik (E) dazu ausgebildet ist, diese Steuergrösse in die Erfassung der pegelstandsabhängigen elektrischen Messgrösse bzw. in die Erzeugung des die letztere repräsentierenden elektrischen Ausgangssignals mit einzubeziehen.

2. Vorrichtung nach Anspruch 1, dadurch gekennzeichnet, dass die Wandlereinrichtung (20;70) bezüglich der elektrischen Leitfähigkeit des zu messenden Mediums kalibrierbar ist und dass die Messelektronik (E) dazu ausgebildet ist, die Wandlereinrichtung (20;70) anhand der von der Leitfähigkeitsmesseinrichtung (40) erzeugten Steuergrösse selbsttätig zu kalibrieren.

3. Vorrichtung nach einem der vorangehenden Ansprüche, dadurch gekennzeichnet, dass die Wandlereinrichtung (20) als elektrische Messgrösse die Kapazität der Sonde (S) gegenüber dem Bezugspunkt (┴) erfasst.

4. Vorrichtung nach einem der vorangehenden Ansprüche, dadurch gekennzeichnet, dass die Wandlereinrichtung (70) als elektrische Messgrösse die elektrische Potential-differenz zwischen der Sonde (S) und dem Bezugspunkt (┴) erfasst.

5. Vorrichtung nach einem der vorangehenden Ansprüche, dadurch gekennzeichnet, dass die Messelektronik (E) einen Schaumdiskriminator aufweist, der das Vorliegen von Schaum oder flüssigem Medium signalsiert, wenn die ein Mass für die elektrische Leitfähigkeit des die Sonde umgebenden Mediums darstellende Steuergrösse unter bzw. über einem vorgegebenen Schwellenwert liegt.

6. Vorrichtung nach einem der vorangehenden Ansprüche, dadurch gekennzeichnet, dass die Leitfähigkeitsmesseinrichtung (40) den Leitfähigkeitsfühler (F) mit elektrischer Wechselspannung speist, welche mit der die Sonde (S) speisenden elektrischen Wechsel-Energie phasenstarr synchronisiert ist.

7. Vorrichtung nach einem der vorangehenden Ansprüche, dadurch gekennzeichnet, dass die elektrische Speiseeinrichtung eine Wechselspannungsquelle (10) für den kapazitiven Betrieb der Sonde (S) und eine mit dieser phasenstarr synchronisierte Wechselstromquelle (60) für den potentiometrischen Betrieb der Sonde (S) aufweist, und dass die Messelektronik (E) eine kapazitive Wandlereinrichtung (20) zur Erfassung der Kapazität der Sonde (S) gegenüber dem Bezugspunkt (1) als elektrische Messgrösse und eine potentiometrische Wandlereinrichtung (70) zur Erfassung der Potentialdifferenz der Sonde (S) gegenüber dem Bezugspunkt (┴) als elektrische Messgrösse umfasst, so dass die Sonde (S) sowohl kapazitiv als auch ein potentiometrisch betreibbar ist.

8. Vorrichtung nach Anspruch 7, dadurch gekennzeichnet, dass die Messelektronik (E) eine Umschalteinrichtung (80) aufweist, welche in Abhängigkeit der von der Leitfähigkeitsmesseinrichtung (40) erzeugten, die elektrische Leitfähigkeit des die Sonde (S) umgebenden Mediums repräsentierenden Steuergrösse die Messelektronik (E) vom kapazitiven Betrieb in den potentiometrischen Betrieb der Sonde (S) und umgekehrt umschaltet.

9. Vorrichtung nach Anspruch 8, dadurch gekennzeichnet, dass die Umschaltung vom potentiometrischen Betrieb in den kapazitiven Betrieb der Sonde (S) erfolgt, wenn die elektrische Leitfähigkeit des die Sonde umgebenden Mediums unter einen vorgegebenen Schwellenwert von insbesondere 1-2 µS liegt.

10. Vorrichtung nach einem der Ansprüche 7-9, dadurch gekennzeichnet, dass die Sonde (S) gleichzeitig an die Wechselspannungsquelle (10) und an die Wechselstromquelle (60) angeschlossen ist.

11. Vorrichtung nach einem der vorangehenden Ansprüche, dadurch gekennzeichnet, dass die Sonde (S) zusätzlich mit einem Temperaturfühler (T) für das sie umgebende Medium ausgestattet ist.

12. Vorrichtung nach einem der vorangehenden Anprüche, dadurch gekennzeichnet, dass der Leitfähigkeitsfühler (L) im wesentlichen zwei im gegenseitigen Abstand angeordnete Elektroden (L₁,L₂;L₁₁,L₁₂;L₂₁,L₂₂) umfasst und dass die Elektroden (L₁,L₂;L₁₁, L₁₂;L₂₁,L₂₂) und die Sonde (S) im Bereich der Elektroden so ausgebildet sind, dass beim Absinken des Mediumspegels unter die Elektroden die Bildung von Flüssigkeitsbrücken zwischen den Elektroden des Leitfähigkeitsfühlers (L) vermieden wird.

13. Vorrichtung nach Anspruch 12, dadurch gekennzeichnet, dass die Sonde (S) im Bereich des Leitfähigkeitsfühlers (L) mit relativ scharfen Abrisskanten (44,45;46) versehen ist.
